# EUROPEAN PATENT APPLICATION

(11) **EP 4 447 307 A1**
(43) Date of publication of application: **16.10.2024**
(21) Application number: 24168925.6
(22) Date of filing: 08.04.2024
(51) Int. Cl.: H02P 25/18, H02P 9/48, H02K 7/18

(54) **SYSTEM AND METHOD FOR CONTROLLING WIND TURBINE GENERATOR**

(30) Priority: 13.04.2023 FI 20235418
(71) Applicant: Arpiainen, Tero, 00920 Helsinki (FI)
(72) Inventor: Arpiainen, Tero, 00920 Helsinki (FI)
(74) Representative: Primrose Oy

(57) **Abstract**

The invention relates to a system and method for controlling wind turbine generator (1). The method comprises measuring an operation value of the wind turbine generator (1) and providing a measured operation value, determining a connection pattern of the multiple separate coils (10, 20, 30, 40) to each other in the variable connection arrangement based on the measured operation value. The method further comprises setting the variable connection arrangement to correspond the determined connection pattern for connecting the multiple separate coils (10, 20, 30, 40) to each other according to the determined connection pattern between the first and second terminals (12, 14) based on the measured operation value of the wind turbine generator (1).

## Description

### FIELD OF THE INVENTION

The present invention relates to a system for controlling a wind turbine generator and more particularly to a system according to the preamble of claim 1. The present invention also relates to a method for controlling a wind turbine generator and more particularly to a method according to the preamble of claim 14.

### BACKGROUND OF THE INVENTION

In the prior art wind turbine generators, the output voltage from a stator of the wind turbine generator is dependent on the rotation speed of a rotor of the wind turbine generator. The wind power plants are provided with mechanical gearbox such that the rotation speed of blades in relation to the rotation speed of the rotor of the wind turbine generator. The output voltage has a minimum operation value and a maximum operation value which are dependent on the rotation speed of the rotor. Accordingly, each gear of the gear box has a minimum rotation speed for the blades of the wind power plant and for the rotor such that the minimum output voltage is achieved.

One of the problems associated with the prior art is that the wind power plant is unable to provide electricity when the rotation speed of the blades and the rotor are under the minimum rotation speed. Further, the maximum output voltage of the wind turbine generator may be achieved only when the maximum rotation speed of the rotor is reached with the used gear.

### BRIEF DESCRIPTION OF THE INVENTION

An object of the present invention is to provide a system and method so as to solve or at least alleviate the prior art disadvantages.

The objects of the invention are achieved by a system which is characterized by what is stated in the independent claim 1. The objects of the invention are also achieved by a method which is characterized by what is stated in the independent claim 14.

The preferred embodiments of the invention are disclosed in the dependent claims.

The invention is based on the idea of providing a system configured to control wind turbine generator. The wind turbine generator comprises a rotor arranged to rotate in response to rotation of one or more blades of a wind power plant and a stator configured to generate electric current in response to rotation of the rotor in relation to the stator. The stator comprises a stator circuit having a first terminal and a second terminal. The stator circuit of the stator comprises multiple separate coils arranged between the first and second terminals of the stator circuit, the stator circuit being provided with a variable connection arrangement configured to determine connection patterns of the multiple separate coils to each other between the first and second terminals. The system comprises a measuring unit configured to measure an operation value of the wind turbine generator. The system further comprises a controller unit configured to determine the connection patterns of the multiple separate coils to each other in the variable connection arrangement and to set the connection patterns of the multiple separate coils to each other between the first and second terminals based on the measured operation value of the wind turbine generator measured with the measuring unit.

In the present invention the wind power plant may be having a horizontal rotation axis and blade(s) configured to rotate around the horizontal rotation axis. In the present invention the wind power plant may be having a vertical rotation axis and wing(s) configured to rotate around the vertical rotation axis. Accordingly, the terms blade and wing are interchangeable and within the scope of the present invention. Accordingly, the connection pattern of the multiple separate coils is set based on the measured operation value of the wind turbine generator. The connection pattern defines a combination of one or more coils connected with parallel connection to each other and one or more coils connected with serial connection with the one or more coils connected with parallel connection to each other. Changing the connection pattern of the multiple separate coils changes impedance of the stator circuit. The changed impedance further changes the output voltage of the stator in relation to the rotation speed. Thus, the output voltage of the stator may be provided higher at lower rotation speeds of the rotor.

In some embodiments, the controller unit is configured to determine the connection patterns of the multiple separate coils to each other in the variable connection arrangement. The connection pattern comprises a first set of separate coils of the multiple separate coils, the first set of separate coils being arranged in parallel connection with each other, and a second set of separate coils of the multiple separate coils, the second set of separate coils being arranged in serial connection with the first set of separate coils.

The separate coils of the second set of separate coils of the multiple separate coils are further arranged in serial connection with each other.

The number coils in the first set of coils and the number of coils in the second set of coils in the connection pattern define impedance of the stator circuit.

In some embodiments, the controller unit is configured to set the connection patterns of the multiple separate coils to each other in the variable connection arrangement, the controller unit is arranged to set number of separate coils in the first set of separate coils, and number of separate coils in the second set of separate coils.

The number of separate coils in the first set of separate coils and the number of separate coils in the second set of separate coils are set based on the measured operation value of the wind turbine generator.

Changing the number of separate coils in the first set of separate coils and the number of separate coils in the second set of separate coils is configured to change the impedance of the stator circuit and further the output voltage.

Further, changing the ratio of separate coils in the first set of separate coils and in the second set of separate coils is configured to change the impedance of the stator circuit and further the output voltage.

In some embodiments of the present invention, the variable connection arrangement of the stator circuit comprises switching units arranged between the separate coils and configured to determine the connection patterns of the multiple separate coils to each other in the variable connection arrangement. The switching units are configured to provide parallel connections and serial connections between the separate coils in the connection patterns.

The switching units are arranged such that the connection patterns of the stator circuit may be changed by utilizing the switching units. The switching units are arranged to enable different connection patterns of the multiple separate coils to each other. The switching units and the connection arrangement of the stator circuit are configured to enable arranging the multiple separate coils in different combinations of parallel connections and serial connections between the coils.

In some embodiments, the switching units have a first operating state in which electric current is configured to flow through the switching unit and a second operating state in which electric current is prevented from flowing through the switching unit.

Accordingly, changing the operating state of the switching units enables setting and changing the connection pattern of the multiple separate coils.

In some embodiments, the switching units are provided as electrical switches.

In some other embodiments, the switching units are provided as electronic switches.

In some other embodiments, the switching units are provided as field-effect transistors.

In some other embodiments, the switching units are provided as relays.

In some embodiments, the controller unit is configured to operate the switching units for setting the connection patterns of the multiple separate coils to each other in the variable connection arrangement.

In some other embodiments, the controller unit is configured to operate the switching units and set the switching units to the first operating state and to the second operating state to set the connection patterns of the multiple separate coils to each other in the variable connection arrangement.

The controller unit is configured to operate the switching units.

In some embodiments, the controller unit is configured to automatically operate the switching units based on the measured operation value of the wind power generator for providing a predetermined connection pattern.

The controller unit is configured to set the switching units to the first and second operating state.

In some embodiments, the controller unit is configured to automatically set the switching units to the first and second operating state based on the measured operation value of the wind power generator for providing a predetermined connection pattern.

In some embodiments, the controller unit is configured to separately operate each of the switching units.

In some other embodiments, the controller unit is separately connected to each of the switching units and configured to separately operate each of the switching units.

Accordingly, the controller unit is configured to separately operate each of the switching units. Thus, the different connection patterns may be achieved efficiently.

In some embodiments, the measuring unit is configured to measure output voltage of the stator between the first and second terminals, the measured output voltage being the measured operation value.

In this embodiment, the measuring unit comprises a voltage meter.

In some other embodiments, the measuring unit is configured to measure output current of stator between the first and second terminals, the measured output current being the measured operation value.

In this embodiment, the measuring unit comprises a current meter.

In some further embodiments, the measuring unit is configured to measure rotation speed of the rotor, the measured rotation speed being the measured operation value.

In this embodiment, the measuring unit comprises a rotation sensor.

In some embodiments, the controller unit is configured to store two or more predetermined operation thresholds defining threshold values for the measured operation value, each of the two or more predetermined operation thresholds having an associated predetermined connection pattern of the multiple separate coils to each other in the variable connection arrangement of the stator circuit between the first and second terminals. The controller unit is configured to receive measured operation value from the measuring unit, compare the received measured operation value with the two or more predetermined operation thresholds, determine the predetermined connection pattern of the multiple separate coils based on the comparing of the received measured operation value and the two or more predetermined operation thresholds, and set the connection pattern of the multiple separate coils to correspond the determined predetermined connection pattern of the multiple separate coils.

Accordingly, the control comprises different predetermined connection patterns which are associated to different measured operation values. The controller unit determines the connection pattern based on the measured operation value and is configured to set the switching units to the first and second operating state according to the determined connection pattern.

In some embodiments, the controller unit is configured to set the connection pattern of the multiple separate coils to each other to correspond the determined predetermined connection pattern of the multiple separate coils by operating the switching units.

In some other embodiments, the controller unit is configured to set the connection pattern of the multiple separate coils to each other to correspond the determined predetermined connection pattern of the multiple separate coils by operating the switching units and setting the switching units to the first operating state and to the second operating state according to the determined predetermined connection pattern of the multiple separate coils.

In some embodiments, the controller unit is configured to set the connection patterns of the multiple separate coils to each other to correspond the determined predetermined connection pattern of the multiple separate coils by changing the number of separate coils in the first set of separate coils, and the number of separate coils in the second set of separate coils.

In some embodiments, the controller unit is configured to set the connection patterns of the multiple separate coils to each other to correspond the determined predetermined connection pattern of the multiple separate coils by operating the switching units and setting the switching units to the first operating state or to the second operating state according to the determined predetermined connection pattern of the multiple separate coils for setting the number of separate coils in the first set of separate coils, and the number of separate coils in the second set of separate coils.

The different predetermined connection patterns of the multiple separate coils provide different predetermined impedance for the stator circuit.

The present invention is further based on an idea of providing a method for controlling wind turbine generator. The wind turbine generator comprising a rotor arranged to rotate in response to rotation of one or more blades of a wind power plant and a stator configured to generate electric current in response to rotation of the rotor in relation to the stator. The stator comprises a stator circuit having a first terminal and a second terminal.

According to the present invention the stator circuit of the stator comprises multiple separate coils arranged between the first and second terminals of the stator circuit, the stator circuit being provided with a variable connection arrangement configured to determine connection patterns of the multiple separate coils to each other between the first and second terminals.

The method comprises measuring an operation value of the wind turbine generator and providing a measured operation value, determining a connection pattern of the multiple separate coils to each other in the variable connection arrangement based on the measured operation value, and setting the variable connection arrangement to correspond the determined connection pattern for connecting the multiple separate coils to each other according to the determined connection pattern between the first and second terminals based on the measured operation value of the wind turbine generator.

Accordingly, the method provides a solution in which the connection pattern of the multiple separate coils is determined and set according to the measured operation value of the wind turbine generator. The connection pattern determines the impedance of the stator and further the output voltage of the wind turbine generator. Thus, the method enables adjusting the output voltage of the wind turbine generator in relation to the rotation speed of the rotor.

In some embodiments, the connection pattern comprises a first set of separate coils of the multiple separate coils, the first set of separate coils being arranged in parallel connection with each other, and a second set of separate coils of the multiple separate coils, the second set of separate coils being arranged in serial connection with the first set of separate coils. The method comprises determining the connection pattern of the multiple separate coils to each other in the variable connection arrangement comprises determining a number of separate coils in the first set of separate coils and a number of separate coils in the second set of separate coils based on received measured operation value, and setting the variable connection arrangement to correspond the determined connection pattern having the determined number of separate coils in the first set of separate coils and the determined number of separate coils in the second set of separate coils between the first and second terminals based on the measured operation value of the wind turbine generator.

Accordingly, the impedance of the stator circuit is amended by changing the number of coils in the first set of separate coils and the number of coils in the second set of separate coils.

In some embodiments, the variable connection arrangement of the stator circuit comprises switching units arranged between the separate coils and configured to determine the connection patterns of the multiple separate coils to each other in the variable connection arrangement. The switching units have a first operating state in which electric current is configured to flow through the switching unit and a second operating state in which electric current is prevented from flowing through the switching unit. The method comprises setting the variable connection arrangement to correspond the determined connection pattern comprises operating the switching units by setting the switching units to the first operating state or to the second operating state to provide the variable connection arrangement to correspond the determined connection pattern of the multiple separate coils.

The connections patterns are changed or set by operating the switching units arranged between the separate coils.

In some embodiments, the method comprises measuring output voltage of the stator between the first and second terminals, and providing the measured output voltage as the measured operation value.

In some other embodiments, the method comprises measuring output current of stator between the first and second terminals, and providing the measured output current as the measured operation value.

In some further embodiments, the method comprises measuring rotation speed of the rotor, and providing the measured rotation speed as the measured operation value.

In some embodiments, the method comprises providing two or more predetermined operation thresholds defining threshold values for the measured operation value, each of the two or more predetermined operation thresholds having an associated predetermined connection pattern of the multiple separate coils to each other in the variable connection arrangement of the stator circuit between the first and second terminals. The method further comprises comparing the measured operation value with the two or more predetermined operation thresholds, determining the predetermined connection pattern of the multiple separate coils based on the comparing of the measured operation value and the two or more predetermined operation thresholds, and setting the connection pattern of the multiple separate coils to each other to correspond the determined predetermined connection pattern of the multiple separate coils.

Utilizing the predetermined operation thresholds enables automatically changing or setting the connection pattern based on the measured operation value.

In some embodiments, the controller unit is configured to change the connections of the multiple separate coils to each other to correspond the determined predetermined connection pattern of the multiple separate coils to each other by changing the number of separate coils in the first set of separate coils, and the number of separate coils in the second set of separate coils.

In some other embodiments, the controller unit is configured to change the connections of the multiple separate coils to each other to correspond the determined predetermined connection pattern of the multiple separate coils to each other by operating the switching units and setting the switching units to the first operating state or to the second operating state according to the determined predetermined connection pattern of the multiple separate coils to each other for changing the number of separate coils in the first set of separate coils, and the number of separate coils in the second set of separate coils.

The system disclosed above may be configured to carry out the described method.

Further, the described method may be carried out by the system disclosed above.

It should be noted that the above mentioned embodiments of the present invention may be combined in a feasible manner to implement the present invention.

The present invention provides system and method enabling adjusting output voltage of the stator of the wind turbine generator at different rotation speeds of the rotor of the wind turbine generator. Accordingly, the operation range of the wind turbine generator may be broadened as the minimum output voltage may be achieved with lower rotation speed of the rotor. Further, also the higher output voltage levels may be achieved with lower rotation speeds of the rotor. Therefore, the overall efficiency of the wind turbine power plant is increased.

### BRIEF DESCRIPTION OF THE DRAWINGS

The invention is described in detail by means of specific embodiments with reference to the enclosed drawings, in which
Figure 1 shows schematically a wind power plant;
Figure 2 shows schematically a wind turbine generator;
Figures 3 and 4 show schematically different embodiments of a system according to the present invention;
Figures 5 to 7 show schematically one embodiment of a stator circuit of a wind turbine generator according to the present invention;
Figures 8 to 11 show schematically another embodiment of a stator circuit of a wind turbine generator according to the present invention;
Figure 12 shows schematically operation of prior art wind turbine generator;
Figure 13 shows schematically operation of a wind turbine generator according to the present invention;
Figures 14 to 18 show schematically a modified embodiment of the stator circuit of figures 8 to 11.

### DETAILED DESCRIPTION OF THE INVENTION

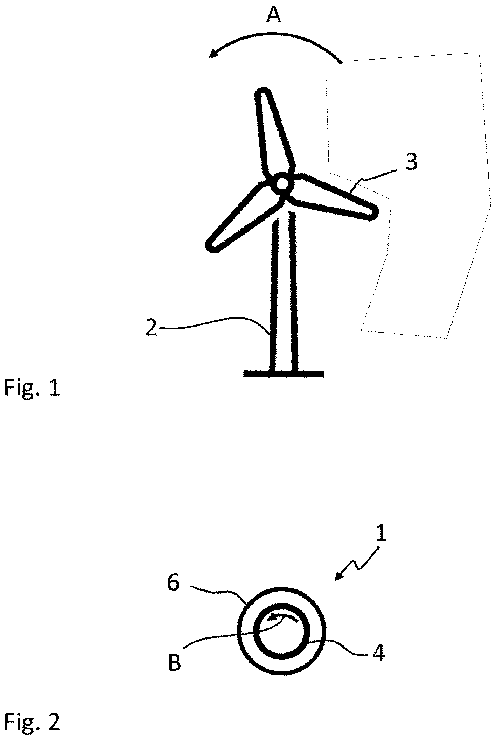

Figure 1 shows schematically a wind power plant 2. The wind power plant 2 has one or more blades 3 which are arranged to rotate around a rotation axis as response to wind acting on the blades 3, as show with arrow A.

The wind power plant 2 further comprises a wind turbine generator 1 which is configured to convert kinetic energy of the rotating blades 3 into electrical energy. Figure 2 shows a schematic illustration of the wind turbine generator 1. The wind turbine generator comprises a rotor 4 which is operatively connected to the blades 3 of the wind power plant 2. The rotor 4 is arranged to rotate is response to rotation of the blades 3 as shown with arrow B in figure 2.

Rotor 4 of a wind turbine generator is a commonly known part and detailed description of the rotor is therefore omitted. It should be noted, that the present invention is not restricted to type of rotor, but the rotor 4 may be any known type or rotor.

In some embodiments, the rotor 4 is directly connected to the blades 3. Thus, the rotation speed of the blades 3 correspond the rotation speed of the rotor 4.

In some other embodiments, the rotor 4 is connected to the blades with a separate connection arrangement (not shown) such as a gear box or the like.

The wind turbine generator 1 further comprises a stator 6. Stator 6 is a stationary component arranged to convert rotating magnetic field produced by the rotating rotor 4 to electric current. The stator 6 comprises a stator circuit having a fist terminal and second terminal. An output voltage is generated between first and second terminals as a response to rotation of the rotor 4 in relation to the stator 6.

In the present invention the stator circuit of the stator comprises multiple separate coils arranged between the first and second terminals of the stator circuit. The stator circuit is provided with a variable connection arrangement configured to determine connection patterns of the multiple separate coils to each other between the first and second terminals. Accordingly, the connection pattern of the multiple separate coils is provided variable such that the multiple separate coils may be connected to each other with different connection patterns.

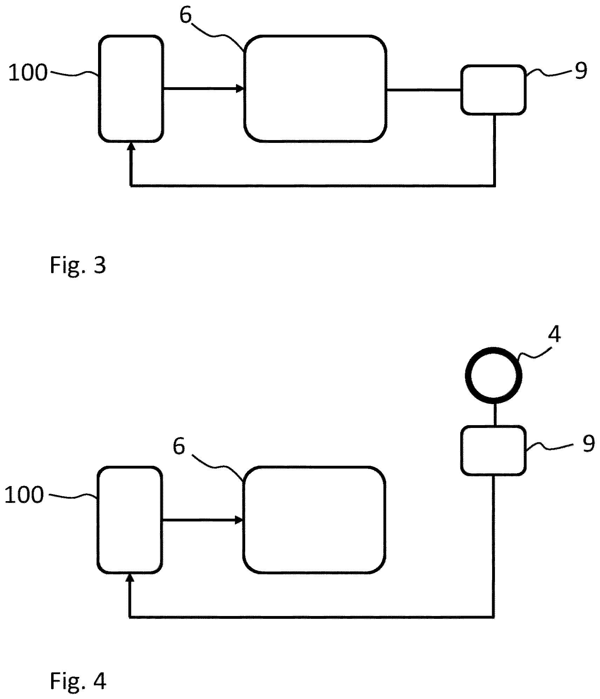

Figures 3 and 4 show schematically different embodiments of a system according to the present invention. The system comprises the stator 6 and a controller unit 100 connected to the stator 6. The system further comprises a measuring unit 9 configured to measure one or more operation values of the wind turbine generator 1. The measuring unit 9 is connected to the controller unit 100. The controller unit 100 is configured to receive measured operation values from the measuring unit 9.

The controller unit 100 is further configured to determine connection pattern of the multiple separate coils in the variable connection arrangement of the stator circuit. Further, the controller unit is configured to determine the connection pattern of the multiple separate coils based on the measured operation values received from the measuring unit 9.

The controller unit 100 is further configured to set or change the connection pattern of the multiple separate coils according to the determined connection pattern. Therefore, the controller unit 100 is configured to set or change the connection pattern of the multiple separate coils to correspond the determined connection pattern.

In the embodiment of figure 3, the measuring unit 9 is configured to measure the operation value of the stator 6.

In some embodiments, the measuring unit 9 is configured to measure output voltage of the stator 6 or stator circuit. Thus, the measured output voltage is the measured operation value received in the controller unit 100.

In some alternative embodiments, the measuring unit 9 is configured to measure output current of the stator 6 or stator circuit. Thus, the measured output current is the measured operation value received in the controller unit 100.

In some further embodiments, the measuring unit 9 is configured to measure output voltage and the output current of the stator 6 or stator circuit.

Figure 4 shows another embodiment, in this embodiment the measuring unit 9 is configured to measure operation value of the rotor 4.

In some embodiments, the measuring unit 9 is configured to measure rotation speed, rounds per minute, of the rotor 4. Thus, the measured rotation speed is the measured operation value received in the controller unit 100.

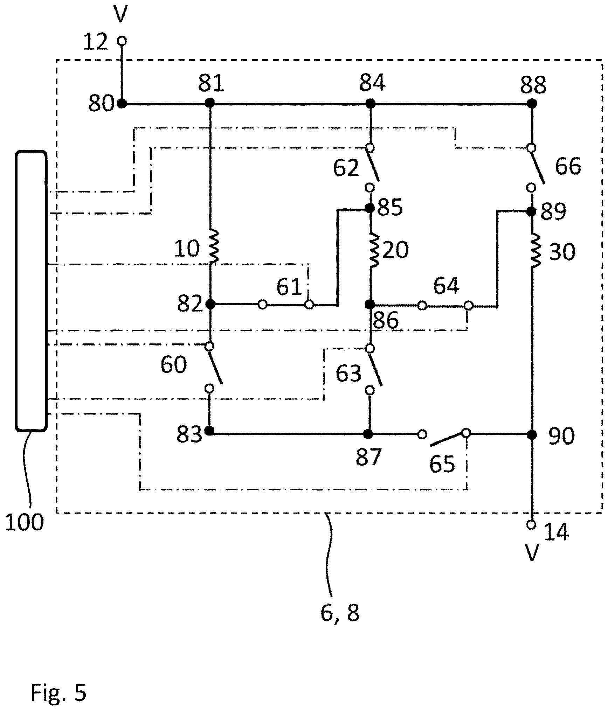

Figures 5 to 7 show schematically one embodiment of the system of present invention. The system comprises the controller unit 100 connected to the stator 6. The stator 6 comprises the stator circuit 8. The stator circuit 8 comprises the first terminal 12 and the second terminal 14. The stator circuit 8 further comprises three separate coils 10, 20, 30 arranged between the first and second terminals 12, 14. The stator circuit 8 is provided with a variable connection arrangement configured to determine connection pattern of the three separate coils 10, 20, 30 to each other.

In the present application the term variable connection arrangement means a connection arrangement in which the connections between the separate coils may be changed or the connection pattern of the separate coils may be changed.

The stator circuit 8 is further provided with switching units 60, 61, 62, 63, 64, 65, 66 arranged between the separate coils 10, 20, 30. The switching units 60, 61, 62, 63, 64, 65, 66 are configured such that the connection pattern of the separate coils may be changed by operating the switching units 60, 61, 62, 63, 64, 65, 66.

The switching units 60, 61, 62, 63, 64, 65, 66 have a first operating state in which electric current is configured to flow through the switching units 60, 61, 62, 63, 64, 65, 66 and a second operating state in which electric current is prevented from flowing through the switching units 60, 61, 62, 63, 64, 65, 66.

The controller unit 100 is connected to the switching units 60, 61, 62, 63, 64, 65, 66 and configured to operate the switching units 60, 61, 62, 63, 64, 65, 66 for setting or changing the connection pattern of the three separate coils 10, 20, 30 to each other. Accordingly, the controller unit 100 is configured to set the switching units 60, 61, 62, 63, 64, 65, 66 to the first operating state and to the second operating state for setting or changing the connection pattern of the multiple separate coils 10, 20, 30 to each other.

The controller unit 100 is configured to first determine the connection pattern of the three coils 10, 20, 30 based on the received measured operation value of the wind turbine generator 1. Them the controller is configured to operate the switching units 60, 61, 62, 63, 64, 65, 66 to set the connection pattern of the three separate coils 10, 20, 30 to correspond the determined connection pattern of the multiple separate coils 10, 20, 30.

The switching units 60, 61, 62, 63, 64, 65, 66 are configured to provide parallel connections and serial connections between the separate coils 10, 20, 30 in different connection patterns.

The controller unit 100 is configured to determine the connection patterns of the separate coils 10, 20, 30 to each other in the variable connection arrangement. Each connection pattern comprises a first set of separate coils 10, 20, 30 of the multiple separate coils 10, 20, 30. The first set of separate coils 10, 20, 30 is arranged in parallel connection with each other. Each connection pattern further comprises a second set of separate coils 10, 20, 30 of the multiple separate coils 10, 20, 30. The second set of separate coils 10, 20, 30 is arranged in serial connection with the first set of separate coils 10, 20, 30. The separate coils 10, 20, 30 of the second set of coils are further arranged in serial connection with each other.

The controller unit 100 is configured to set or change the connection patterns of the multiple separate coils 10, 20, 30 to each other in the variable connection arrangement by setting or changing the number of separate coils 10, 20, 30 in the first set of separate coils 10, 20, 30 and the number of separate coils 10, 20, 30 in the second set of separate coils 10, 20, 30.

The controller unit 100 is configured to set or change the number of separate coils 10, 20, 30 in the first set of separate coils 10, 20, 30 and the number of separate coils 10, 20, 30 in the second set of separate coils 10, 20, 30 by operating the switching units 60, 61, 62, 63, 64, 65, 66.

The controller unit 100 comprises or is configured to store two or more predetermined operation thresholds defining threshold values for the measured operation value. Each of the two or more predetermined operation thresholds is associated with a predetermined connection pattern of the multiple separate coils 10, 20, 30.

In some embodiments, the predetermined operation threshold is a threshold value for the measured operation value. The controller unit 100 comprises one connection pattern when the measured operation value is over the threshold value and another connection pattern when the measured operation value is under the threshold value. Alternatively, the controller unit 100 comprises one connection pattern when the measured operation value is between two threshold values.

In some embodiments, the predetermined operation threshold is a threshold range for the measured operation value. The controller unit 100 comprises one connection pattern when the measured operation value is within a particular threshold range.

When the controller unit 100 receives the measured operation value from the measuring unit 9, the controller unit 100 is configured to compare the received measured operation value with the two or more predetermined operation thresholds and determine the predetermined connection pattern of the multiple separate coils 10, 20, 30 based on the comparing of the received measured operation value and the two or more predetermined operation thresholds. Then, the controller unit 100 is configured to set or change the connection pattern of the multiple separate coils 10, 20, 30 to correspond the determined predetermined connection pattern of the multiple separate coils 10, 20, 30.

In the embodiment of figures 5 to 7 the variable connection arrangement of the stator circuit 8 comprises three separate coil 10, 20, 30 and switching units 60, 61, 62, 63, 64, 65, 66 between the separate coils 10, 20, 30 for changing the connection pattern between the three separate coil 10, 20, 30.

In the embodiment of figures 5 to 7, for providing a simple example impedance of each separate coil 10, 20, 30 is considered to be 1 ohm and the maximum output voltage of the stator circuit 8 between the first and second terminals 12, 14 is considered to be 100 V and the minimum operation voltage 60 V. Further, the measuring unit 9 is configured to measure rotation speed of the rotor 4. The measured operation value is the measured rotation speed of the rotor 4. The maximum rotation speed of the rotor 4 is considered to be 1000 rounds per minute.

Figure 5 shows a first connection pattern of the three separate coils 10, 20, 30 in the stator circuit 8. All three coils 10, 20, 30 are connected in serial connection to each other. The impedance of the connection pattern is 3 ohms. The measured rotation speed is within a first threshold range or under the first threshold value.

At upper limit of the first threshold range or at the first threshold value, the output voltage of the stator circuit 8 is at 100 V.

When the rotation speed of the rotor 4 reaches a second threshold range or exceeds the first threshold value, the controller unit 100 determines a second connection pattern of the three separate coils 10, 20, 30 based on the measured rotation speed and the predetermined threshold values. The controller unit 100 operates the switching units 60, 61, 62, 63, 64, 65, 66 to set the connection pattern of three separate coils to the second connection pattern.

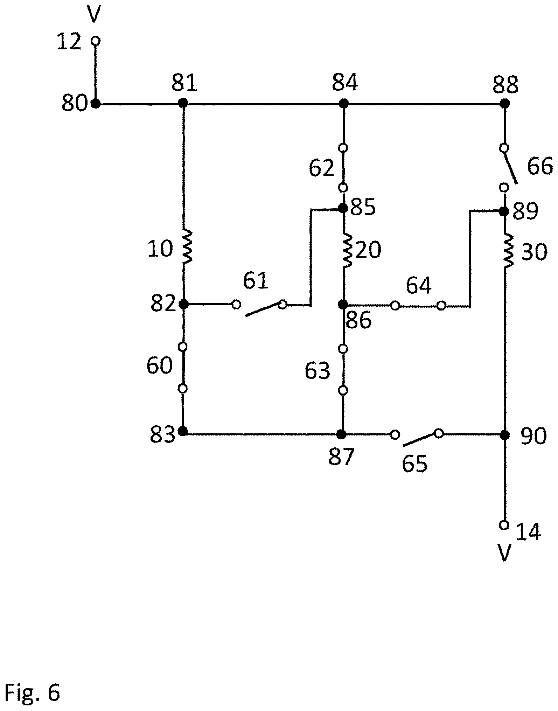

Figure 6 shows the second connection pattern of the three separate coils 10, 20, 30 in the stator circuit 8. The coils 10, 20 are connected in parallel connection to each other and the coil 30 is connected in serial connection with the coils 10, 20. The impedance of the connection pattern is 1,5 ohms. The measured rotation speed is within a second threshold range or under the second threshold value but over the first threshold value.

At upper limit of the second threshold range or at the second threshold value, the output voltage of the stator circuit 8 is at 100 V.

When the rotation speed of the rotor 4 reaches a third threshold range or exceeds the second threshold value, the controller unit 100 determines the connection pattern of the three separate coils 10, 20, 30 based on the measured rotation speed and the predetermined threshold values. The controller unit 100 operates the switching units 60, 61, 62, 63, 64, 65, 66 to set the connection pattern of three separate coils to a third connection pattern.

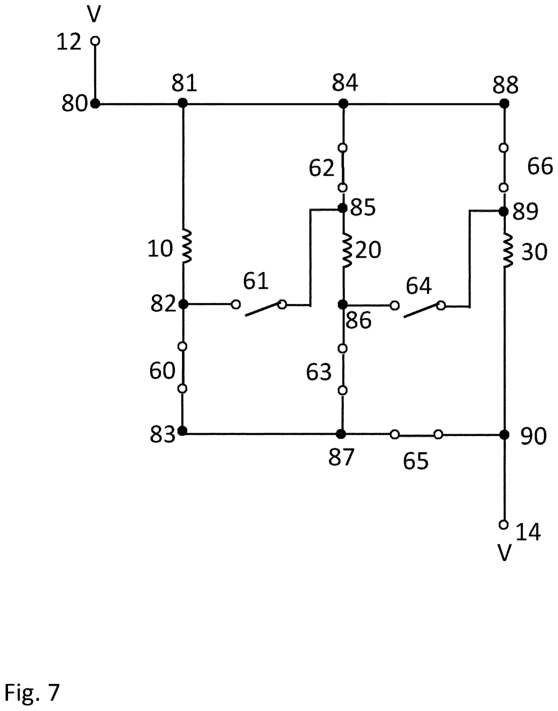

Figure 7 shows the third connection pattern of the three separate coils 10, 20, 30 in the stator circuit 8. All three coils 10, 20, 30 are connected in parallel connection to each other. The impedance of the connection pattern is 0,33 ohms. The measured rotation speed is within the third threshold range or over the second threshold value.

At upper limit of the third threshold range or at the third threshold value, the output voltage of the stator circuit 8 is at 100 V.

As shown above, high voltage level of the stator circuit 8 may be achieved with different rotation speeds of the rotor 4 by changing the impedance of the stator circuit 8.

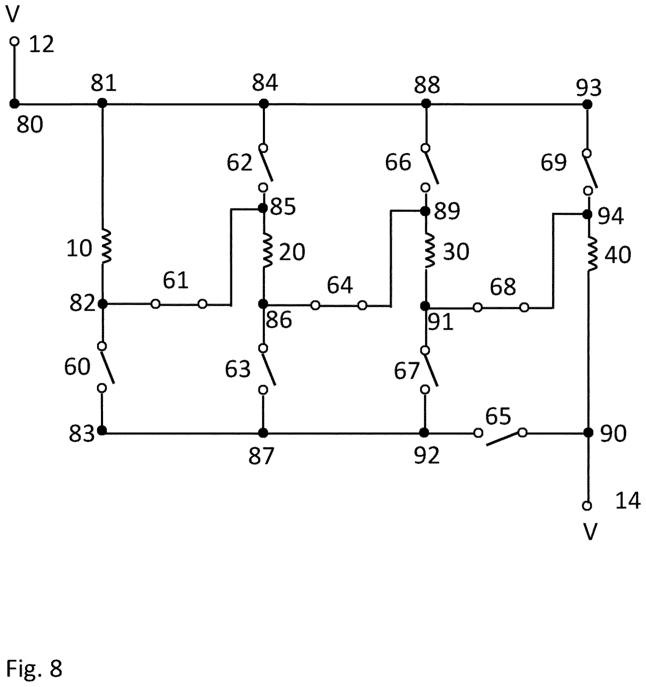

Figures 8 to 11 show another embodiment of the present invention. The variable connection arrangement of the stator circuit 8 comprises four separate coil 10, 20, 30, 40 and switching units 60, 61, 62, 63, 64, 65, 66, 67, 68, 69 between the separate coils 10, 20, 30, 40 for changing the connection pattern between the three separate coil 10, 20, 30, 40.

In the embodiment of figures 8 to 11, for providing a simple example impedance of each separate coil 10, 20, 30, 40 is considered to be 1 ohm and the maximum output voltage of the stator circuit 8 between the first and second terminals 12, 14 is considered to be 100 V and the minimum operation voltage 60 V. Further, the measuring unit 9 is configured to measure rotation speed of the rotor 4. The measured operation value is the measured rotation speed of the rotor 4. The maximum rotation speed of the rotor 4 is considered to be 1000 rounds per minute.

Figure 8 shows a first connection pattern of the four separate coils 10, 20, 30, 40 in the stator circuit 8. All four coils 10, 20, 30, 40 are connected in serial connection to each other. The impedance of the connection pattern is 4 ohms. The measured rotation speed is within a first threshold range or under the first threshold value.

At upper limit of the first threshold range or at the first threshold value, the output voltage of the stator circuit 8 is at 100 V. Accordingly, the maximum output voltage of 100 V is reached with lowest rotation speed of the rotor 4.

When the rotation speed of the rotor 4 reaches a second threshold range or exceeds the first threshold value, the controller unit 100 determines a second connection pattern of the four separate coils 10, 20, 30, 40 based on the measured rotation speed and the predetermined threshold values. The controller unit 100 operates the switching units 60, 61, 62, 63, 64, 65, 66, 67, 68, 69 to set the connection pattern of four separate coils 10, 20, 30, 40 to the second connection pattern.

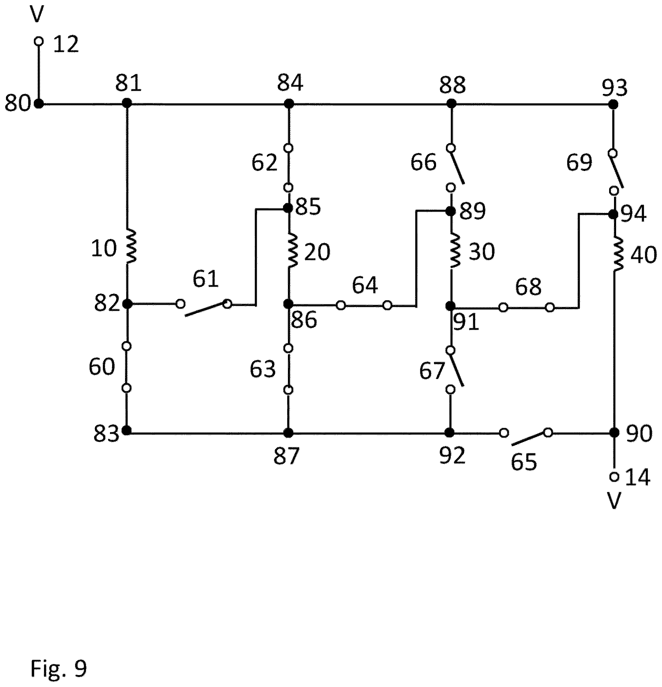

Figure 9 shows the second connection pattern of the four separate coils 10, 20, 30, 40 in the stator circuit 8. The coils 10, 20 are connected in parallel connection to each other and the coils 30, 40 are connected in serial connection with the coils 10, 20 and in serial connection with each other. The impedance of the connection pattern is 2,5 ohms. The measured rotation speed is within a second threshold range or under the second threshold value but over the first threshold value. The output voltage of the stator circuit 8 is brought back under the maximum output voltage of 100 V.

At upper limit of the second threshold range or at the second threshold value, the output voltage of the stator circuit 8 is at 100 V.

When the rotation speed of the rotor 4 reaches a third threshold range or exceeds the second threshold value, the controller unit 100 determines the connection pattern of the four separate coils 10, 20, 30, 40 based on the measured rotation speed and the predetermined threshold values. The controller unit 100 operates the switching units 60, 61, 62, 63, 64, 65, 66, 67, 68, 69 to set the connection pattern of four separate coils 10, 20, 30, 40 to a third connection pattern.

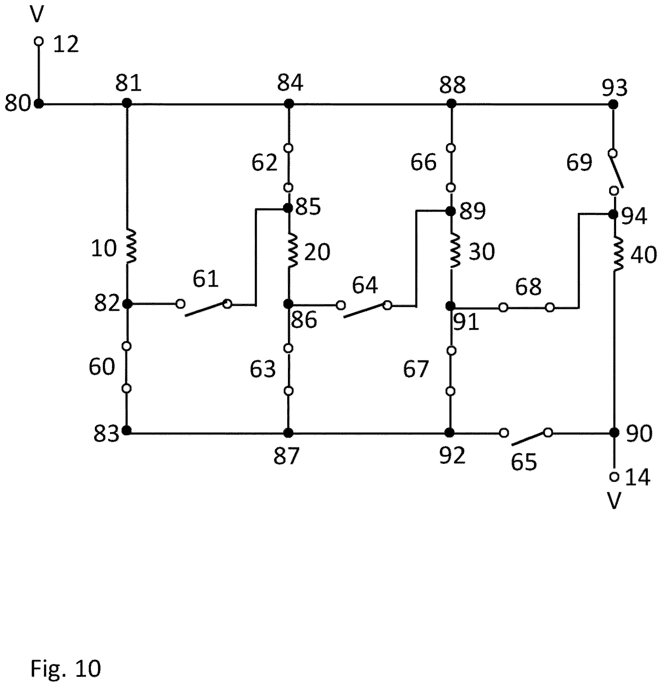

Figure 10 shows the third connection pattern of the four separate coils 10, 20, 30, 40 in the stator circuit 8. The coils 10, 20, 30 are connected in parallel connection to each other and the coil 40 is connected in serial connection with the coils 10, 20, 30. The impedance of the connection pattern is 1,33 ohms. The measured rotation speed is within a third threshold range or under the third threshold value but over the second threshold value. The output voltage of the stator circuit 8 is again brought back under the maximum output voltage of 100 V.

At upper limit of the third threshold range or at the third threshold value, the output voltage of the stator circuit 8 is at 100 V.

When the rotation speed of the rotor 4 reaches a fourth threshold range or exceeds the third threshold value, the controller unit 100 determines the connection pattern of the four separate coils 10, 20, 30, 40 based on the measured rotation speed and the predetermined threshold values. The controller unit 100 operates the switching units 60, 61, 62, 63, 64, 65, 66, 67, 68, 69 to set the connection pattern of four separate coils 10, 20, 30, 40 to a fourth connection pattern.

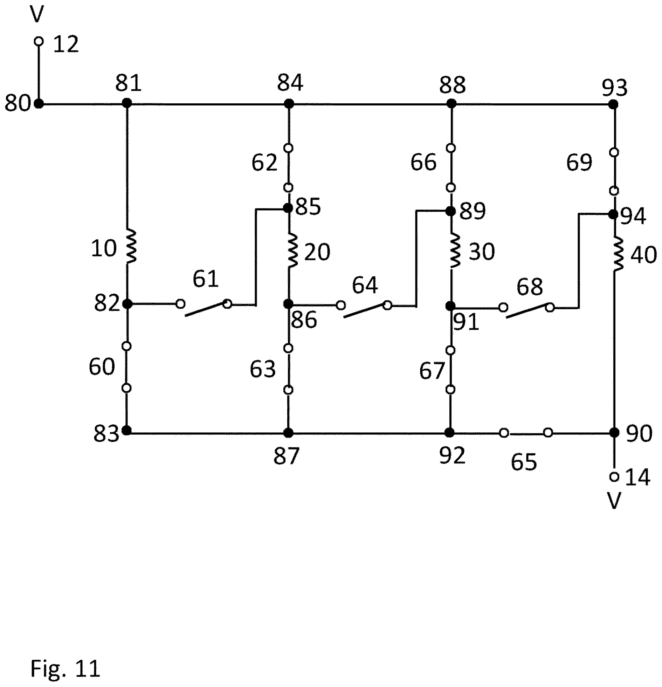

Figure 11 shows the fourth connection pattern of the four separate coils 10, 20, 30, 40 in the stator circuit 8. All four coils 10, 20, 30, 40 are connected in parallel connection to each other. The impedance of the connection pattern is 0,25 ohms. The measured rotation speed is within the fourth threshold range or over the third threshold value.

At upper limit of the fourth threshold range or at the fourth threshold value, the output voltage of the stator circuit 8 is at 100 V.

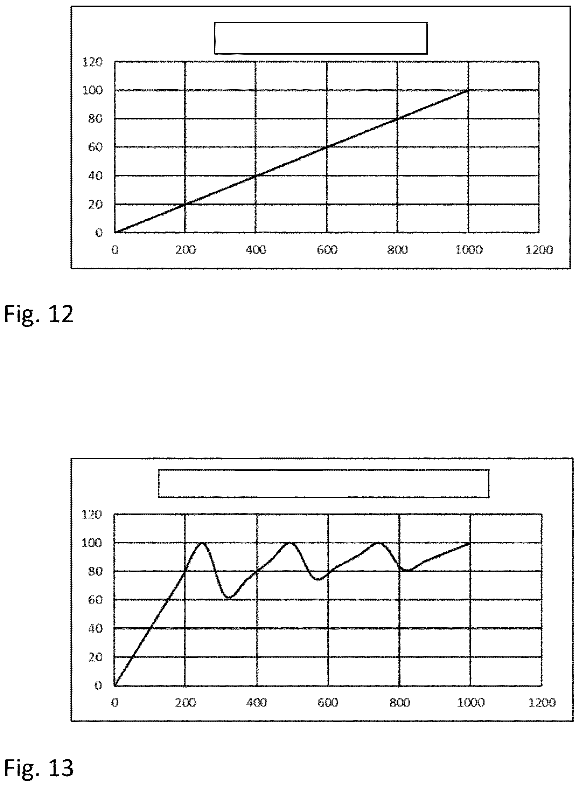

Figure 12 shows schematically wind turbine generator output voltage in relation to the rotation speed of the rotor 4 of a prior art wind turbine generator having the operation parameters according to the embodiment of figures 8 to 11. As may be seen, the output voltage of the stator 6 increases linear manner as the rotation speed of the rotor 4 increases. Therefore, the wind turbine generator may be operated only when the rotation speed is 600 rpm or more, as the minimum operating voltage is 60 V. Therefore, the prior wind turbine generator can operate only when the rotation speed of the rotor 4 is between 600 to 1000 rpm.

Figure 13 shows schematically wind turbine generator output voltage in relation to the rotation speed of the rotor 4 in a solution according to the present invention.

In the first connection pattern of figure 8, the minimum output voltage of 60 V is achieved with rotation speed of the rotor 4 of about 150 rpm and the maximum output voltage of 100 V is achieved with rotation speed of the rotor 4 of about 250 rpm. The 250 rpm may be determined as the first threshold value.

When the rotation speed of the rotor 4 exceed 250, the controller unit 100 changes the connection pattern of the coils 10, 20, 30, 40 to the second connection pattern of figure 9. In the second connection pattern of figure 9, the minimum output voltage of 60 V is achieved with rotation speed of the rotor 4 of about 250 rpm and the maximum output voltage of 100 V is achieved with rotation speed of the rotor 4 of about 500 rpm. The 500 rpm may be determined as the second threshold value.

When the rotation speed of the rotor 4 exceed 500, the controller unit 100 changes the connection pattern of the coils 10, 20, 30, 40 to the third connection pattern of figure 10. In the third connection pattern of figure 10, the minimum output voltage of 60 V is achieved with rotation speed of the rotor 4 of about 500 rpm and the maximum output voltage of 100 V is achieved with rotation speed of the rotor 4 of about 750 rpm. The 750 rpm may be determined as the third threshold value.

When the rotation speed of the rotor 4 exceed 750, the controller unit 100 changes the connection pattern of the coils 10, 20, 30, 40 to the fourth connection pattern of figure 11. In the fourth connection pattern of figure 11, the minimum output voltage of 60 V is achieved with rotation speed of the rotor 4 of about 750 rpm and the maximum output voltage of 100 V is achieved with rotation speed of the rotor 4 of about 1000 rpm. The 1000 rpm may be determined as the fourth threshold value, and is further the maximum rotation speed of the rotor 4.

As may be high output voltages may be achieved with lower rotation speeds of the rotor 4 and further the operation range of the wind turbine generator 1 is increased to rotation speeds between 150 to 1000 rpm.

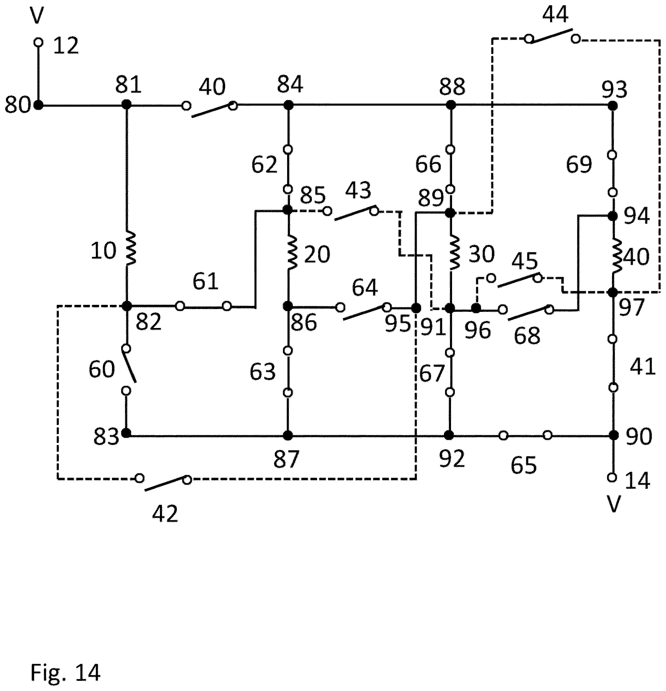

Figures 14 to 18 show a modification of the embodiment of figures 8 to 11. In this embodiment the stator circuit 8 is provided with an additional load distribution connection arrangement.

In the third connection pattern according to the figure 10, the power of coil 40 is significantly greater than the power of the other coils 10, 20, 30. The load distribution connection arrangement is configured to alternate which of coils 10, 20, 30, 40 is connected in series with the other coils. Thus, the load is distributed evenly to the coils 10, 20, 30, 40 when the third connection pattern is used.

In the first mode of the third connection pattern shown in figure 14, the coils 20, 30, 40 are connected in parallel connection to each other and the coil 10 is connected in serial connection with them. Load is highest in coil 10.

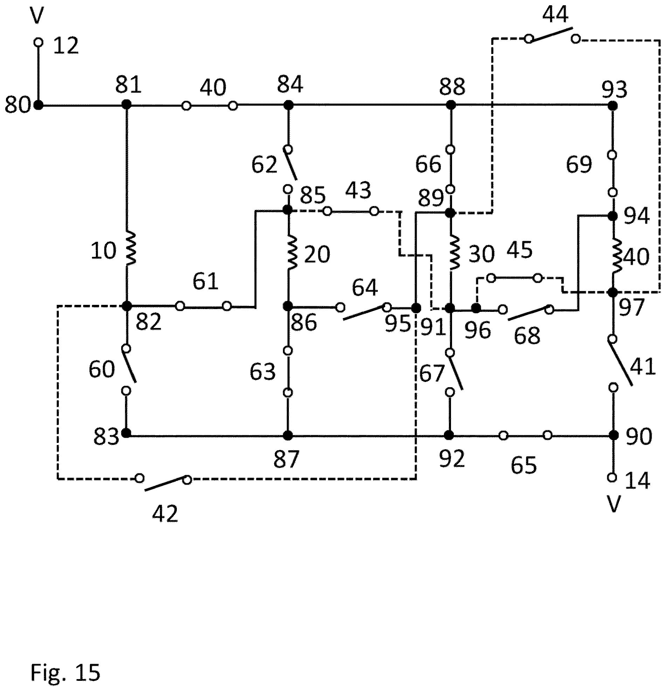

In the second mode of the third connection pattern shown in figure 15, the coils 10, 30, 40 are connected in parallel connection to each other and the coil 20 is connected in serial connection with them. Load is highest in coil 20.

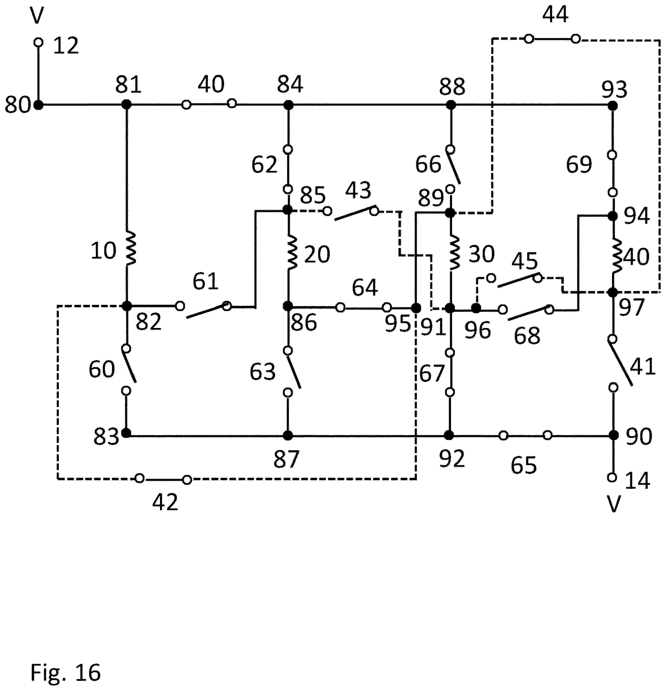

In the third mode of the third connection pattern shown in figure 16, the coils 10, 20, 40 are connected in parallel connection to each other and the coil 30 is connected in serial connection with them. Load is highest in coil 30.

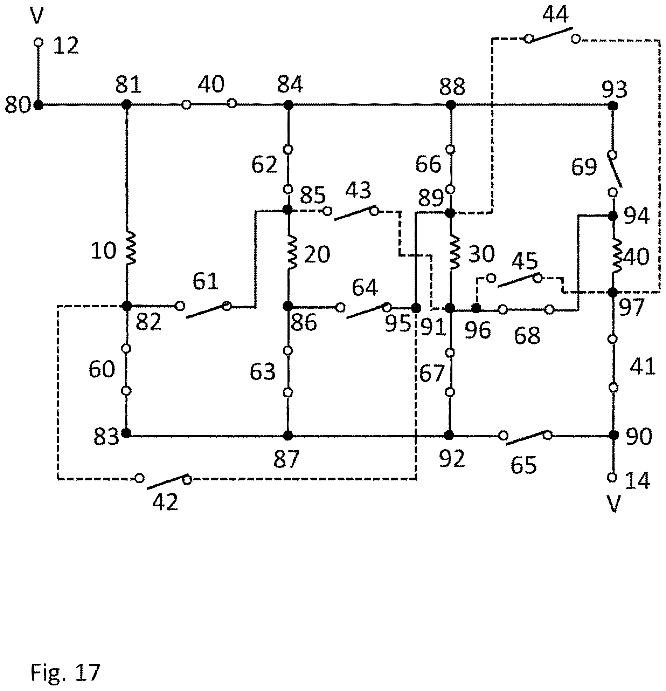

In the fourth mode of the third connection pattern shown in figure 17, the coils 10, 20, 30 are connected in parallel connection to each other and the coil 40 is connected in serial connection with them. Load is highest in coil 40.

Thus, while in the exemplary embodiments illustrated in figures 14 to 18, the connection pattern as such does not change, the placement of the coils 10, 20, 30 and 40 within the connection pattern is changed. This allows the coil experiencing the highest load in the connection pattern to be changed. If this change is made several times, it allows rotating the highest load among the coils 10, 20, 30 and 40, which allows the load to be distributed evenly amongst the coils 10, 20, 30 and 40 over time.

Thus, the connection, which is defined by the connection pattern, has a load that is not distributed evenly between the coils 10, 20, 30 and 40. Yet, by changing the placement of the coils within the connection pattern, the load of the connection is over time distributed at least substantially evenly among the coils 10, 20, 30 and 40. The controller unit 100 may be configured to cause the changing of placements. The controller unit 100 also be configured to determine the time period after which the placements are to be changed. It is to be noted that at least two coils of the coils 10, 20, 30 and 40 are to change their placements at one occurrence of changing placements of the coils 10, 20, 30 and 40 within the connection pattern.

While the load of the connection is over time distributed more evenly, this can be achieved without causing changes to the total voltage or current of the connection. In other words, in situation in which the load of the connection is unevenly distributed among the coils 10, 20, 30 and 40, the connection pattern of the connection may be kept the same, but the placement of the coils 10, 20, 30 and 40 within that connection pattern may be change by changing placements of at least two of the coils 10, 20, 30 and 40. This allows the load to be more evenly distributed among the coils 10, 20, 30 and 40 over time.

The time period, after which the placement of the coils is to be changed, may be determined by the controller unit 100. The controller unit 100 may also be configured to determine which of the coils 10, 20, 30 and 40 are the ones that are subjected to the change of their placement within the connection pattern. The time period may regular, in other words, when the connection pattern is applied, the placement of the coils 10, 20, 30 and 40 within the connection pattern is changed regularly at fixed time intervals. Alternatively, the time period may vary. The time period, whether a fixed length or varying, may be determined based on determining for each of the coils 10, 20, 30 and 40 their energy storage capacity as well as for how long that coil has been loaded at a certain power. This way the controller unit 100 may determine the time periods for each placement that result in the load of the connection to be at least substantially evenly distributed among the coils 10, 20, 30 and 40.

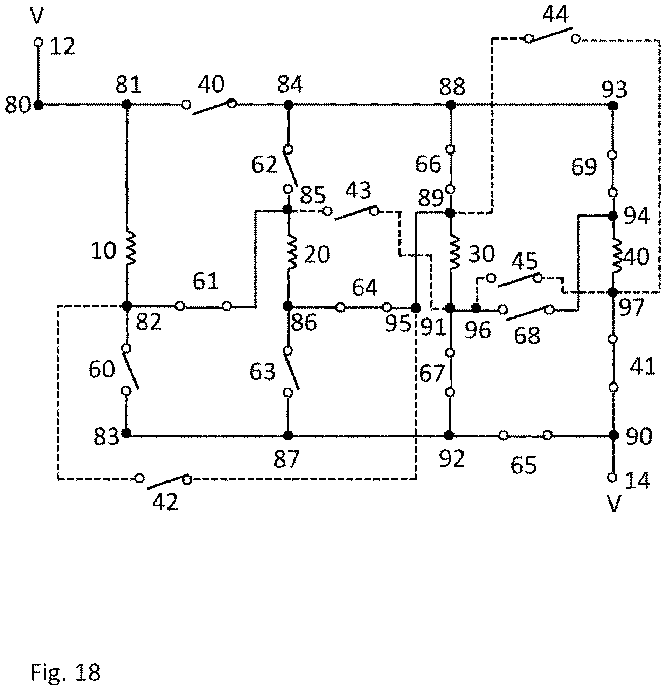

In the second connection pattern according to the figure 9, the power of coils 30, 40 is significantly greater than the power of the other coils 10, 20. The load distribution connection arrangement is configured to alternate which of coils 10, 20, 30, 40 is connected in parallel and which are connected in series with the parallel connected coils. Thus, the load is distributed evenly to the coils 10, 20, 30, 40 when the third connection pattern is used. Figure 18 shows the load distribution connection arrangement which may alter the connections without departing form the second connection pattern of figure 9.

In the embodiment of figures 14 to 18 the load distribution connection for alternating which coils 10, 20, 30, 40 of the connection pattern are arranged parallel and which is series is carried out by operating additional switching units 42, 43, 44, 45.

The invention has been described above with reference to the examples shown in the figures. However, the invention is in no way restricted to the above examples but may vary within the scope of the claims.

## Claims

1. A system configured to control wind turbine generator (1), the wind turbine generator (1) comprising a rotor (4) arranged to rotate in response to rotation of one or more blades (3) of a wind power plant (2) and a stator (6) configured to generate electric current in response to rotation of the rotor (4) in relation to the stator (6), the stator (6) comprising a stator circuit having a first terminal (12) and a second terminal (14),**characterized in that**:
- the stator circuit of the stator (6) comprises at least four separate coils (10, 20, 30, 40) arranged between the first and second terminals (12, 14) of the stator circuit, the stator circuit being provided with a variable connection arrangement configured to determine connection patterns of the multiple separate coils (10, 20, 30, 40) to each other between the first and second terminals (12, 14);
- the system comprises a measuring unit (9) configured to measure an operation value of the wind turbine generator (1);
- the system comprises a controller unit (100) configured to determine the connection patterns of the at least four separate coils (10, 20, 30, 40) to each other in the variable connection arrangement and to set the connection patterns of the at least four separate coils (10, 20, 30, 40) to each other between the first and second terminals (12, 14) based on the measured operation value of the wind turbine generator (1) measured with the measuring unit (9); and wherein
- the controller unit (100) is configured to determine the connection patterns of the multiple separate coils (10, 20, 30, 40) to each other in the variable connection arrangement, and at least one of the connection patterns in the variable connection arrangement comprises:
- a first set of separate coils (10, 20, 30, 40) of the at least four separate coils (10, 20, 30, 40), the first set of separate coils (10, 20, 30, 40) being arranged in parallel connection with each other,
- a second set of separate coils (10, 20, 30, 40) of the multiple separate coils (10, 20, 30, 40), the second set of separate coils (10, 20, 30, 40) being arranged in serial connection with the first set of separate coils (10, 20, 30, 40), and
- the controller unit (100) is configured to change placements of at least two coils of the at least four separate coils (10, 20, 30, 40) within the at least one connection pattern after a time period.

2. A system according to claim 1, **characterized in that** the controller unit (100) is configured to set the connection patterns of the at least four separate coils (10, 20, 30, 40) to each other in the variable connection arrangement, the controller unit (100) is arranged to set:
- number of separate coils (10, 20, 30, 40) in the first set of separate coils (10, 20, 30, 40), and
- number of separate coils (10, 20, 30, 40) in the second set of separate coils (10, 20, 30, 40).

3. A system according to claims 1 or 2, **characterized in that** the variable connection arrangement of the stator circuit comprises switching units (60, 61, 62, 63, 64, 65, 66, 67, 68, 69) arranged between the separate coils (10, 20, 30, 40) and configured to determine the connection patterns of the at least four separate coils (10, 20, 30, 40) to each other in the variable connection arrangement, the switching units (60, 61, 62, 63, 64, 65, 66, 67, 68, 69) being configured to provide parallel connections and serial connections between the separate coils (10, 20, 30, 40) in the connection patterns; and wherein
the switching units (60, 61, 62, 63, 64, 65, 66, 67, 68, 69) have a first operating state in which electric current is configured to flow through the switching unit (60, 61, 62, 63, 64, 65, 66, 67, 68, 69) and a second operating state in which electric current is prevented from flowing through the switching unit (60, 61, 62, 63, 64, 65, 66, 67, 68, 69); and
the switching units (60, 61, 62, 63, 64, 65, 66, 67, 68, 69) are provided as:
- electrical switches (60, 61, 62, 63, 64, 65, 66, 67, 68, 69); or
- electronic switches (60, 61, 62, 63, 64, 65, 66, 67, 68, 69); or
- field-effect transistors (60, 61, 62, 63, 64, 65, 66, 67, 68, 69); or
- relays (60, 61, 62, 63, 64, 65, 66, 67, 68, 69).

4. A system according to claim 3, **characterized in that**:
- the controller unit (100) is configured to operate the switching units (60, 61, 62, 63, 64, 65, 66, 67, 68, 69) and set the switching units (60, 61, 62, 63, 64, 65, 66, 67, 68, 69) to the first operating state and to the second operating state to set the connection patterns of the at least four separate coils (10, 20, 30, 40) to each other in the variable connection arrangement; and wherein
- the controller unit (100) is configured to separately operate each of the switching units (60, 61, 62, 63, 64, 65, 66, 67, 68, 69); or
- the controller unit (100) is separately connected to each of the switching units (60, 61, 62, 63, 64, 65, 66, 67, 68, 69) and configured to separately operate each of the switching units (60, 61, 62, 63, 64, 65, 66, 67, 68, 69).

5. A system according to any one of claims 1 to 4, **characterized in that** the measuring unit (9) is configured to measure:
- output voltage of the stator (6) between the first and second terminals (12, 14), the measured output voltage being the measured operation value; or
- output current of stator (6) between the first and second terminals (12, 14), the measured output current being the measured operation value; or
- rotation speed of the rotor (4), the measured rotation speed being the measured operation value.

6. A system according to any one of claims 1 to 5, **characterized in that** the controller unit (100) is configured to:
- store two or more predetermined operation thresholds defining threshold values for the measured operation value, each of the two or more predetermined operation thresholds having an associated predetermined connection pattern of the at least four separate coils (10, 20, 30, 40) to each other in the variable connection arrangement of the stator circuit between the first and second terminals (12, 14),
- receive measured operation value from the measuring unit (100),
- compare the received measured operation value with the two or more predetermined operation thresholds,
- determine the predetermined connection pattern of the at least four separate coils (10, 20, 30, 40) based on the comparing of the received measured operation value and the two or more predetermined operation thresholds; and
- set the connection pattern of the at least four separate coils (10, 20, 30, 40) to correspond the determined predetermined connection pattern of the at least four separate coils (10, 20, 30, 40).

7. A system according to claim 6, **characterized in that** the controller unit (100) is configured to set the connection patterns of the at least four separate coils (10, 20, 30, 40) to each other to correspond the determined predetermined connection pattern of the at least four separate coils (10, 20, 30, 40) by:
- changing the number of separate coils (10, 20, 30, 40) in the first set of separate coils (10, 20, 30, 40), and the number of separate coils (10, 20, 30, 40) in the second set of separate coils (10, 20, 30, 40); or
- operating the switching units (60, 61, 62, 63, 64, 65, 66, 67, 68, 69) and setting the switching units (60, 61, 62, 63, 64, 65, 66, 67, 68, 69) to the first operating state or to the second operating state according to the determined predetermined connection pattern of the at least four separate coils (10, 20, 30, 40) for setting the number of separate coils (10, 20, 30, 40) in the first set of separate coils (10, 20, 30, 40), and the number of separate coils (10, 20, 30, 40) in the second set of separate coils (10, 20, 30, 40).

8. A system according to any previous claim, wherein in the at least one connection pattern, load of the connection is unevenly distributed between the at least four separate coils.

9. A method for controlling wind turbine generator (1), the wind turbine generator (1) comprising a rotor (4) arranged to rotate in response to rotation of one or more blades (3) of a wind power plant (2) and a stator (6) configured to generate electric current in response to rotation of the rotor (4) in relation to the stator (6), the stator (6) comprising a stator circuit having a first terminal (12) and a second terminal (14), **characterized in that**:
- the stator circuit of the stator (6) comprises at least four separate coils (10, 20, 30, 40) arranged between the first and second terminals (12, 14) of the stator circuit, the stator circuit being provided with a variable connection arrangement configured to determine connection patterns of the at least four separate coils (10, 20, 30, 40) to each other between the first and second terminals (12, 14),
the method comprises:
- measuring an operation value of the wind turbine generator (1) and providing a measured operation value;
- determining a connection pattern of the at least four separate coils (10, 20, 30, 40) to each other in the variable connection arrangement based on the measured operation value; and
- setting the variable connection arrangement to correspond the determined connection pattern for connecting the at least four separate coils (10, 20, 30, 40) to each other according to the determined connection pattern between the first and second terminals (12, 14) based on the measured operation value of the wind turbine generator (1).

10. A method according to claim 9, **characterized in that** the connection pattern comprises a first set of separate coils (10, 20, 30, 40) of the at least four separate coils (10, 20, 30, 40), the first set of separate coils (10, 20, 30, 40) being arranged in parallel connection with each other, and a second set of separate coils (10, 20, 30, 40) of the at least four separate coils (10, 20, 30, 40), the second set of separate coils (10, 20, 30, 40) being arranged in serial connection with the first set of separate coils (10, 20, 30, 40), and the method comprises:
- determining the connection pattern of the at least four separate coils (10, 20, 30, 40) to each other in the variable connection arrangement comprises determining a number of separate coils (10, 20, 30, 40) in the first set of separate coils (10, 20, 30, 40) and a number of separate coils (10, 20, 30, 40) in the second set of separate coils (10, 20, 30, 40) based on received measured operation value, and
- setting the variable connection arrangement to correspond the determined connection pattern having the determined number of separate coils (10, 20, 30, 40) in the first set of separate coils (10, 20, 30, 40) and the determined number of separate coils (10, 20, 30, 40) in the second set of separate coils (10, 20, 30, 40) between the first and second terminals (12, 14) based on the measured operation value of the wind turbine generator (1).

11. A method according to claim 9 or 10, **characterized in that** the variable connection arrangement of the stator circuit comprises switching units (60, 61, 62, 63, 64, 65, 66, 67, 68, 69) arranged between the separate coils (10, 20, 30, 40) and configured to determine the connection patterns of the at least four separate coils (10, 20, 30, 40) to each other in the variable connection arrangement, the switching units (60, 61, 62, 63, 64, 65, 66, 67, 68, 69) having a first operating state in which electric current is configured to flow through the switching unit (60, 61, 62, 63, 64, 65, 66, 67, 68, 69) and a second operating state in which electric current is prevented from flowing through the switching unit (60, 61, 62, 63, 64, 65, 66, 67, 68, 69), and the method comprises:
- setting the variable connection arrangement to correspond the determined connection pattern comprises operating the switching units (60, 61, 62, 63, 64, 65, 66, 67, 68, 69) by setting the switching units (60, 61, 62, 63, 64, 65, 66, 67, 68, 69) to the first operating state or to the second operating state to provide the variable connection arrangement to correspond the determined connection pattern of the at least four separate coils (10, 20, 30, 40).

12. A method according to any one of claims claim 9 to 11, **characterized in that** the method comprises:
- measuring output voltage of the stator (6) between the first and second terminals (12, 14), and providing the measured output voltage as the measured operation value; or
- measuring output current of stator (6) between the first and second terminals (12, 14), and providing the measured output current as the measured operation value; or
- measuring rotation speed of the rotor (4), and providing the measured rotation speed as the measured operation value.

13. A method according to any one of claims claim 9 to 12, **characterized in that** the method comprises:
- providing two or more predetermined operation thresholds defining threshold values for the measured operation value, each of the two or more predetermined operation thresholds having an associated predetermined connection pattern of the at least four separate coils (10, 20, 30, 40) to each other in the variable connection arrangement of the stator circuit between the first and second terminals (12, 14),
- comparing the measured operation value with the two or more predetermined operation thresholds,
- determining the predetermined connection pattern of the at least four separate coils (10, 20, 30, 40) based on the comparing of the measured operation value and the two or more predetermined operation thresholds, and
- setting the connection pattern of the at least four separate coils (10, 20, 30, 40) to each other to correspond the determined predetermined connection pattern of the at least four separate coils (10, 20, 30, 40).

14. A method according to any one of claims 10 to 13, **characterized in that** the controller unit (100) is configured to change the connections of the at least four separate coils (10, 20, 30, 40) to each other to correspond the determined predetermined connection pattern of the at least four separate coils (10, 20, 30, 40) to each other by:
- changing the number of separate coils (10, 20, 30, 40) in the first set of separate coils (10, 20, 30, 40), and the number of separate coils (10, 20, 30, 40) in the second set of separate coils (10, 20, 30, 40); or
- operating the switching units (60, 61, 62, 63, 64, 65, 66, 67, 68, 69) and setting the switching units (60, 61, 62, 63, 64, 65, 66, 67, 68, 69) to the first operating state or to the second operating state according to the determined predetermined connection pattern of the at least four separate coils (10, 20, 30, 40) to each other for changing the number of separate coils (10, 20, 30, 40) in the first set of separate coils (10, 20, 30, 40), and the number of separate coils (10, 20, 30, 40) in the second set of separate coils (10, 20, 30, 40).

15. A method according to any one of claims 9 to 14, **characterized in that** the method is carried out with the system according to any of claims 1 to 8.
